# EUROPEAN PATENT APPLICATION

(11) **EP 3 543 943 A1**
(43) Date of publication of application: **25.09.2019**
(21) Application number: 17872632.9
(22) Date of filing: 26.05.2017
(51) Int. Cl.: G06Q 30/02

(54) **PURCHASE INFORMATION UTILIZATION SYSTEM, PURCHASE INFORMATION UTILIZATION METHOD, AND PROGRAM**

(30) Priority: 18.11.2016 JP 2016225100
(71) Applicant: Research and Innovation Co., Ltd., Tokyo 107-0052 (JP)
(72) Inventor: NAKAOKA, Kuninobu, Tokyo 107-0052 (JP)
(74) Representative: Würmser, Julian
(86) International application number: PCT/JP2017/019755
(87) International publication number: WO 2018/092333

(57) **Abstract**

The purpose of the present invention is to make it possible to provide related content to a terminal of a consumer who purchased a commercial product from any shop. A purchase information utilization system includes: a storage unit which stores a shop and content in association with each other; a receiving unit which receives information related to a receipt from a terminal of a consumer; an analysis unit which analyzes the information related to the receipt to identify a shop from which the consumer purchased a commercial product; and a content providing unit which extracts content related to the identified shop from the storage unit, and provides the extracted content to the terminal.

## Description

### Technical Field

The present invention relates to a purchase information utilization system, a purchase information utilization method, a program, and the like.

### Background Art

Conventionally, WEB questionnaires using the Internet or the like have been conducted. For example, Patent Document 1 discloses a questionnaire system in which a questionnaire access code is attached to a commercial product and a product packaging material of a service provider (company/shop) to allow a user (consumer) to answer instantaneously through a cell phone/portable information terminal equipment, a personal computer, or the like connectable to the Internet. Conventionally, as for an advertisement, consumers best suited to a commercial product of a service provider company have been estimated and the advertisement has been presented on the Internet. For example, a system is disclosed in which an advertisement is linked to the commercial product identification of a commercial product and a commercial product packaging material of a service provider (company/shop) so that, when a user purchased the commercial product, an advertisement deemed best suited to the user (consumer) will be displayed to the user at timing deemed optimum to the service provider through a cell phone/portable information terminal equipment, a personal computer, or the like connectable to the Internet.

### Citation List

### Patent Document

Patent Document 1: Japanese Patent Application Laid-Open No. 2002-373239

### Summary

### Technical Problem

However, in the system as described in Patent Document 1, the service provider could provide content such as the advertisement only to users who purchased the commercial product from company's own shops.

Therefore, in view of the above circumstances, it is an object of the present invention to make it possible to provide related content to a terminal of a consumer who purchased a commercial product from any shop.

### Solution to Problem

A purchase information utilization system according to one aspect of the present invention includes: a storage unit which stores a shop and content in association with each other; a receiving unit which receives information related to a receipt from a terminal of a consumer; an analysis unit which analyzes the information related to the receipt to identify a shop from which the consumer purchased a commercial product; and a content providing unit which extracts, from the storage unit, content associated with another shop related to the identified shop, and provides the extracted content to the terminal.

The term "system" includes a system composed of an information processing apparatus and the like to provide a specific function to a user. For example, the system is composed of a server apparatus, a cloud computing form, ASP (Application Service Provider), a client-server model, and the like, but the present invention is not limited thereto.

Further, a program of the present invention can be installed on or loaded into a computer by downloading the program through any of various recording media, such as an optical disk like a CD-ROM, a magnetic disk, and a semiconductor memory, or through a communication network or the like.

In this specification, the term "unit" does not merely mean a physical component, which also includes a case where the function of the component is implemented by software. Further, the function of one component may be implemented by two or more physical components, or the functions of two or more components may be implemented by one physical component.

### Advantageous Effects of Invention

According to the present invention, related content can be provided to a terminal of a consumer who purchased a commercial product from any shop.

### Brief Description of Drawings

Fig. 1 is a configuration diagram of a purchase information utilization system in one embodiment of the present invention.
Fig. 2 is a block diagram of a mobile terminal and a server apparatus in one embodiment of the present invention.
Fig. 3 is a chart illustrating an example of a shop DB in one embodiment of the present invention.
Fig. 4 is an illustration illustrating an outline of processing of the purchase information utilization system in one embodiment of the present invention.
Fig. 5 is a flowchart illustrating a processing flow of the purchase information utilization system in one embodiment of the present invention.

### Description of Embodiments

### [First embodiment]

One of embodiments of the present invention will be described in detail below. Note that the following embodiment is an illustrative example for describing the present invention, and the present invention is not limited to the embodiment alone. Various modifications are also possible without departing from the scope of the present invention. Further, those skilled in the art can adopt any other embodiment in which each component to be described below is replaced by an equivalent, and such an embodiment shall be included in the scope of the present invention. While the description is made by taking, as an example, the embodiment in which the present invention is carried out using an information processing apparatus to facilitate the understanding of the present invention, the present invention is not limited to the embodiment as mentioned above.

### <1. Outline of System Configuration>

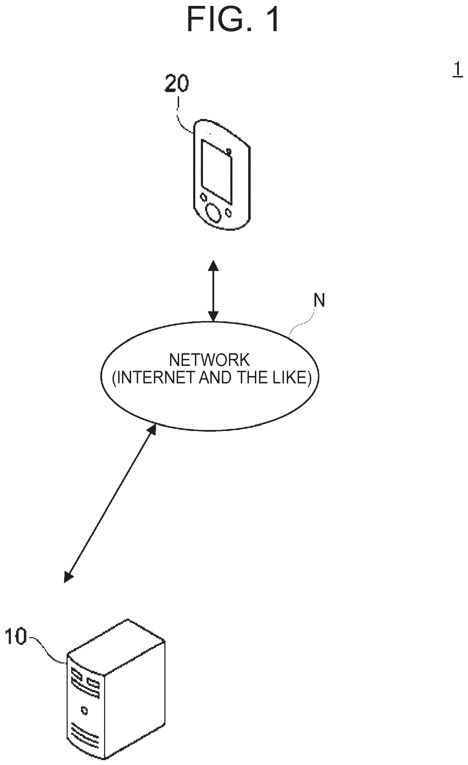

Fig. 1 illustrates an example of the configuration of a purchase information utilization system 1 according to the embodiment. As illustrated in Fig. 1, the purchase information utilization system 1 is configured such that a server apparatus 10 and a mobile terminal 20 are connected to each other through a network N. The purchase information utilization system 1 is a system configured to accumulate purchase information sent from the mobile terminal 20 to the server apparatus 10 in order to utilize the accumulated purchase information for marketing and the like. The purchase information includes, for example, an image of a receipt, bar code information of a purchased commercial product, an image of the commercial product, and the like. The server apparatus 10 can provide content, such as an advertisement, a questionnaire, and a coupon, to the mobile terminal 20 that sent the purchase information.

The network N is configured by a wireless network or a wired network. Examples of communication networks include a mobile telephone network, a PHS (Personal Handy-phone System) network, a wireless LAN (Local Area Network), infrared communication, Bluetooth (registered trademark), a wired LAN, a telephone line, a power line network, and a network compliant with IEEE 1394 or the like.

### <2. Configuration>

### <2-1. Functions of Mobile Terminal 20>

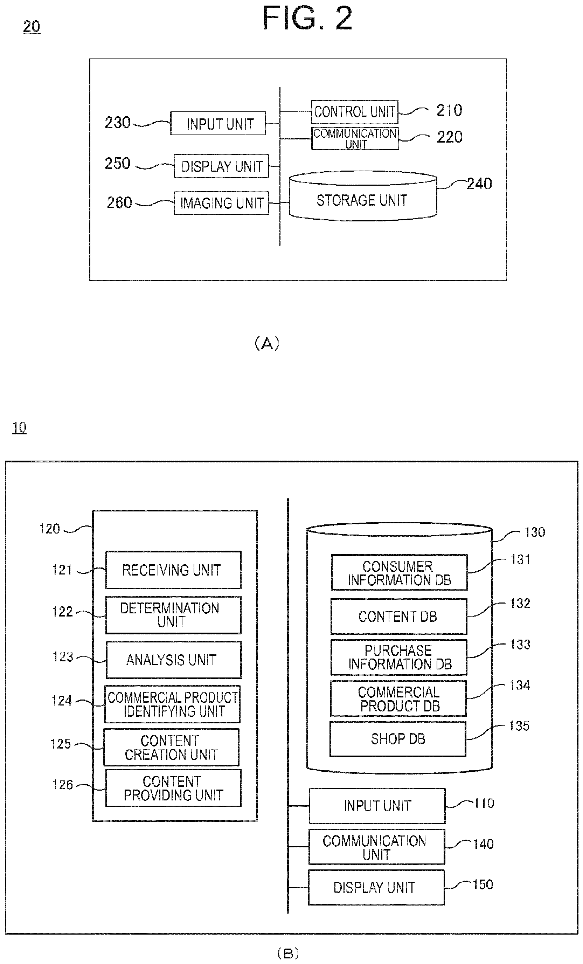

Referring to Fig. 2(A), an example of the configuration of the mobile terminal 20 will be described. The mobile terminal 20 is an information processing apparatus having a function of transmission to the server apparatus 10 through the network N. Specifically, for example, a cell phone or a smartphone, a PC (Personal Computer), a PDA (Personal Digital Assistant), a tablet, a wearable terminal, a game machine, or the like is assumed as the mobile terminal 20, but the mobile terminal 20 is not limited thereto.

Fig. 2(A) is a functional block diagram illustrating an example of functions of the mobile terminal 20. As illustrated in Fig. 2(A), the mobile terminal 20 has a control unit 210 including a CPU and a memory, a communication unit 220 for connection to the network N, an input unit 230 such as a touch panel for accepting operations from a user, a storage unit 240 in which various programs and data necessary for the control unit 210 to execute processes are stored, a display unit 250 for displaying a screen, and an imaging unit 260. Note that the imaging unit 260 is used to capture still images and video, and to read QR codes (registered trademark) and bar codes.

A user of the mobile terminal 20 (hereinafter also called the "consumer") installs a predetermined application (hereinafter also called the "app") on the mobile terminal 20 so that a predetermined service provided by the server apparatus 10 will be available.

When the consumer who installed the app has purchased a commercial product from a shop, the consumer operates the mobile terminal 20 to send the server apparatus 10 information as purchase information. In this instance, it is preferred that the consumer should send the server apparatus 10 an image of a receipt captured as purchase information, and information on the bar code of the commercial product and an image of the purchased commercial product as purchase information.

### <2-2. Functions of Server Apparatus 10>

Referring to Fig. 2(B), an example of functions of the server apparatus 10 will be described. The server apparatus 10 is a computer connected to the network N, which is, for example, a PC, a server, or the like.

Fig. 2(B) is a functional block diagram illustrating an example of the functions of the server apparatus 10. As illustrated in Fig. 2(B), the server apparatus 10 has an input unit 110, a control unit 120, a storage unit 130, a communication unit 140, and a display unit 150.

The input unit 110 is configured to accept operations from an administrator of the server apparatus 10, and can be realized by a keyboard and a mouse, a touch panel, or the like.

The control unit 120 includes an arithmetic processing unit such as a CPU or an MPU, a memory such as a RAM, and an image processing unit. The arithmetic processing unit executes a program recorded in the storage unit 130 based on various inputs to operate various functional units. This program may be stored on a recording medium such as a CD-ROM, or distributed through the network N and installed on the computer. The memory is to temporally store server programs and game programs, and various data necessary for computation during execution of processes in these programs.

The storage unit 130 is configured by a storage device such as a hard disk to record various programs necessary for the control unit 120 to execute processes, data and the like necessary for execution of the various programs. In the storage unit 130, a consumer information DB 131, a content DB 132, a purchase information DB 133, a commercial product DB 134, and a shop DB 135 are further stored.

In the consumer information DB 131, consumer information, such as consumer ID, age, gender, occupation, address, level, and published evaluation request, is stored. It is desired that the consumer information should be entered when the consumer registers the consumer information in the purchase information utilization system 1. The consumer may also register, in the purchase information utilization system 1, birth date, address, occupation, marital history, family structure, family members living together, annual income, household income, and the like as the consumer information.

In the content DB 132, a content ID, a commercial product ID related to the content, a shop ID as a content providing source, the content, and a content publishing condition(s), and the like are stored in association with one another.

The content includes an evaluation request for or a questionnaire about the commercial product to the consumer, a coupon for a commercial product, an advertisement, and a request for monitoring survey. For example, the evaluation request may be to request the consumer who purchased the commercial product to enter a degree of satisfaction with the commercial product numerically. Further, the questionnaire can ask a comment on the commercial product and responses to questions. The advertisement may be, for example, for a sister or related product of the commercial product. Further, the coupon may be a ready-to-use coupon upon purchase of the commercial product, or available for the same commercial product next time or later.

The content is sent to the mobile terminal 20 according to the publishing conditions. The publishing conditions include conditions of the consumer as a publishing target, publishing timing, a shop from which the commercial product was purchased, and the purchased commercial product. The conditions of the consumer include all pieces of information collected by the purchase information utilization system 1, such as the shop from which the consumer purchased the commercial product, the age, occupation, address, and level of the consumer, information related to purchase and stored in the purchase information DB 133 to be described later, and evaluation information. For example, when the number of days from the purchase of the commercial product is used, the publishing timing can be set as the number of days from when the consumer read the commercial product code, when a receiving unit 121 received the commercial product code, or when a commercial product image (shopping scene image) was sent. Further, when the number of days after the commercial product is used, the publishing timing can be set as the number of days from when the consumer sent a use scene image.

Further, as a publishing condition, the commercial product code of a predetermined commercial product can also be registered. In this case, when the consumer purchased the predetermined commercial product, content can be published. For example, if a combination of predetermined commercial products (for example, carrots, potatoes, and onions) is registered as a content publishing condition, recipes that can be made with the combination of predetermined commercial products (for example, curry, simmered meat and potatoes, etc.) can be provided as content. Further, for example, if a predetermined shop and a predetermined commercial product are registered as content publishing conditions, a questionnaire asking why you purchased the commercial product from the shop (or why you did not purchase the commercial product from another shop) can be provided as content.

In the purchase information DB 133, purchase information as information related to purchase actually made by the consumer is accumulated. The purchase information includes, for example, a commercial product code such as a bar code or a JAN code as identification information of a commercial product shot by the consumer, a receipt image captured by the consumer, receipt information extracted from the receipt image, and a shopping scene image captured by the consumer. The receipt information is information obtained by reading text data from the receipt image when the commercial product was purchased. The shopping scene image means an image of the purchased commercial product. Further, information on the consumer who purchased the commercial product and location information of the consumer when registering the purchase information can also be stored as the purchase information.

Further, in the purchase information DB 133, an image of a scene of using the purchased commercial product (usage scene image) and evaluation information as information related to the usage evaluation of the commercial product purchased by the consumer are accumulated in association with the purchase information. The evaluation information includes, for example, the degree of satisfaction with and feedback or a comment on the purchased commercial product. It is desired that the usage scene image should contain the commercial product and the consumer using the commercial product. Having the consumer register the usage scene as the purchase information makes it possible for a company such as a manufacturer or a distributor to grasp "how to use" and "actual usage of' the commercial product. In addition, in the purchase information DB 133, the consumer's comment on the commercial product, the questionnaire from the company to the consumer, and the like can be registered.

In the commercial product DB 134, a commercial product code and a commercial product corresponding to the commercial product code are stored in association with each other. Note that the commercial product DB 134 may also be held by an external system of the purchase information utilization system 1.

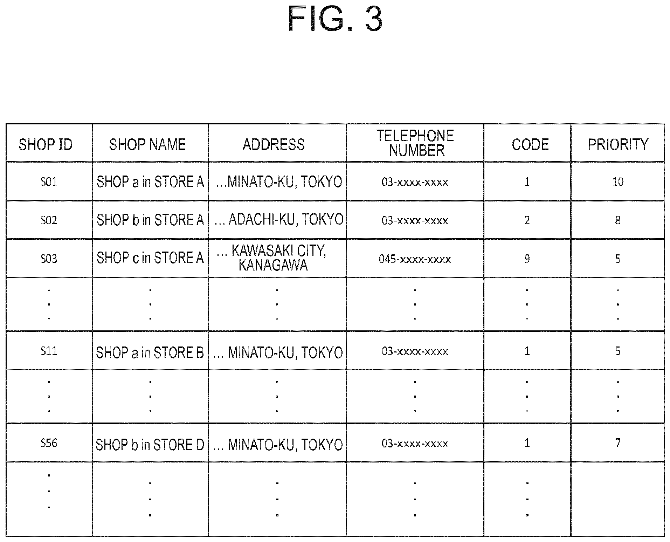

In the shop DB 135, information related to shops is stored. Fig. 3 is a chart illustrating an example of the shop DB 135 according to the embodiment. As illustrated in Fig. 3, shop name, address, telephone number, shop code, and priority are stored in the shop DB 135 in association with each shop ID. The shop code is a code indicative of each of groups in which shops are classified. For example, the same shop code is assigned to shops in the same business category. The priority indicates a degree of ease of delivery of content among shops having the same shop code. For example, it is preferred that the content should be easier to be delivered as the priority is higher. Note that the priority is not limited to be expressed in numerical value as illustrated in Fig. 3, and alphabet letter or any other character string (e.g., high, medium, low) may also be used.

Returning to Fig. 2, the description of the configuration of the server apparatus 10 will be continued.

The communication unit 140 is configured to connect the server apparatus 10 to the network N. For example, the communication unit 140 can be realized by a LAN card, an analog modem, an ISDN modem, and the like, and an interface for connecting these to a processing unit through a transmission path such as a system bus.

The display unit 150 is, for example, a display, a monitor, or the like to display various pieces of information output from the server apparatus 10.

Further, as illustrated in Fig. 2, the control unit 120 includes, as functional units, the receiving unit 121, a determination unit 122, an analysis unit 123, a commercial product identifying unit 124, a content creation unit 125, and a content providing unit 126.

The receiving unit 121 receives purchase information from the mobile terminal 20. For example, the receiving unit 121 can receive a receipt image captured by the consumer. The receiving unit 121 can also receive, from the mobile terminal 20, a commercial product code read by the consumer, an image of a commercial product purchased by the consumer, and an image of a shopping scene of the commercial product. Further, when the mobile terminal 20 has an OCR (Optical character recognition) function or the like, the receiving unit 121 can receive receipt information.

The receiving unit 121 registers the received receipt image, receipt information, commercial product code, and shopping scene image in the purchase information DB 133 as purchase information. Further, when receiving, from the mobile terminal 20, a usage scene image, a comment on the commercial product, and evaluation information as information including an evaluation or the like, obtained by quantifying the degree of satisfaction, it is desired that these pieces of information should also be registered in the purchase information DB 133 in association with the purchase information.

When the receiving unit 121 has received the purchase information, the determination unit 122 determines that the consumer purchased the commercial product. For example, the determination unit 122 may be configured to determine that the consumer has not actually purchased the commercial product when the receiving unit 121 has not received both the receipt image (or receipt information) and the commercial product code as purchase information, and hence not to register the purchase information.

The analysis unit 123 extracts receipt information as text data of the receipt from the received receipt image, and analyzes the receipt information. Specifically, the analysis unit 123 analyzes a telephone number of a shop from the receipt image to check the telephone number with records registered in the shop DB 135. When a record matching up with the analyzed telephone number is included in the shop DB 135, the analysis unit 123 identifies a shop on the record as the shop from which the commercial product was purchased.

In this instance, the analysis unit 123 may also analyze a name of the shop (a logo of the shop) and an address thereof together from the receipt image to identify the shop. For example, when only part of the telephone number could be analyzed from the receipt image, the analysis unit 123 can further analyze the shop name and address to be used as information for identifying the shop. As an example, when the area code could not be analyzed from the receipt image, it is possible for the analysis unit 123 to infer the area code from the address. When identifying the shop, the analysis unit 123 can use analysis results of plural pieces of information to improve the precision of analysis.

Further, the analysis unit 123 may analyze the receipt image to collect purchase information related to the receipt. For example, the analysis unit 123 can analyze whether the kind of commercial product written in the receipt matches up with the kind of received commercial product code. Further, the analysis unit 123 may analyze the shop where the receipt was issued and the time of issuing the receipt, the number of commercial products and the total amount written in the receipt, and the like. The analysis unit 123 can store these pieces of analyzed information in the purchase information DB 133 as purchase information.

Further, it is also possible for the analysis unit 123 to use a correspondence relationship between the receipt information and the commercial product code registered in the storage unit 130 in order to infer specific commercial product identification information based on the read receipt information. Specifically, a commercial product can be analogized from the receipt information by repeating checking of the name of each commercial product extracted from the receipt information against the commercial product identified from the commercial product code.

Note that it is also possible for the mobile terminal 20 to have the function of the analysis unit 123.

The commercial product identifying unit 124 refers to the commercial product DB 134 to identify a commercial product corresponding to a commercial product code based on the commercial product code received by the receiving unit 121.

The content creation unit 125 can accept the creation of new content and register the content on the server apparatus 10. For example, the content creation unit 125 may accept the creation of content from a user of an external system. It is preferred that the content creation unit 125 should accept the name of content, a commercial product to be purchased, recorded publishing items such as an evaluation request to ask the consumer to evaluate a purchased commercial product, a questionnaire, and a coupon, and the conditions and designation of the consumer to which content is to be sent when accepting the creation of content. The created content is stored in the content DB 132 of the server apparatus 10.

The content providing unit 126 provides content to the consumer based on the analysis results from the analysis unit 123. Specifically, the content providing unit 126 refers to the shop DB 135 to extract location information of the shop identified by the analysis unit 123. In the embodiment, the address is extracted as the location information, but the coordinates or the longitude/latitude may be extracted. Next, the content providing unit 126 extracts the ID of a shop located within a predetermined distance from the extracted location information. In this instance, it is preferred to extract any shop other than the shop identified by the analysis unit 123, but the same shop as that identified by the analysis unit 123 may also be extracted. The content providing unit 126 may further refer to the priority registered in the shop DB 135 to extract the ID of a shop located within a predetermined distance from the extracted location information and to which the highest priority is given. Thus, the content providing unit 126 can select a shop with a higher probability as the priority of the shop is higher. Further, the content providing unit 126 refers to the content DB 132 to extract content associated with the extract shop ID, and sends the content to the mobile terminal 20 of the consumer. In this instance, the content providing unit 126 may also be configured to determine whether the extracted content fulfills the publishing conditions, and to send the content to the mobile terminal 20 when the content fulfills the publishing conditions.

Note that the content providing unit 126 may also be configured to refer to the shop DB 135 so as to extract a shop code of the shop identified by the analysis unit 123. In this case, the content providing unit 126 extracts the ID of a shop as a source of providing the content based on the priority from shops having the same shop code as the extracted shop code. Further, the content providing unit 126 can also extract the ID of a shop as the source of providing the content by using both the location information and the shop code of the shop identified by the analysis unit 123. In this case, content of another shop close in location to the identified shop and similar in business category to the identified shop can be provided. In Fig. 3, an example in which shop information on so-called retail shops are registered in the shop DB 135 is illustrated, but the shops are not limited to the retail shops. For example, makers, franchisees of a franchise chain, virtual shops on the Internet may also be registered in the shop DB 135. In this case, the registration of the location information is not indispensable, and as for shops without registered location information, a source of providing content is extracted based on information such as the priority.

Thus, even a shop (e.g., a competitor) different from the shop where the consumer performed purchase behavior can provide an advertisement or the like. Further, since the receipt information is accumulated sequentially in the purchase information DB 133, it is possible to follow a purchase history of the consumer.

Further, when the commercial product code is included in the purchase information, the content providing unit 126 can provide content related to the commercial product identified by the commercial product identifying unit 124. For example, when the identified commercial product is included in receipt information, the content providing unit 126 may provide content related to the identified commercial product. In this case, the content providing unit 126 refers to the content DB 132 to determine whether predetermined content is registered in association with the identified commercial product. Here, the predetermined content includes an evaluation request, a questionnaire, a coupon, and the like. When content about the commercial product corresponding to the commercial product code is registered in the content DB 132, the conditions of the consumer is referred to from the publishing conditions registered in association with the content to determine whether the consumer who sent the commercial product code meets the conditions. When the consumer who sent the commercial product code meets the conditions of the consumer associated with the content, the content providing unit 126 sends the mobile terminal 20 the content based on the publishing timing. The publishing timing may be when the receiving unit 121 has received the commercial product code, or when the receiving unit 121 has received the image of the commercial product.

The content providing unit 126 may also be configured to provide the content to the mobile terminal 20 when the consumer read the commercial product code on the mobile terminal 20. Further, the content providing unit 126 may be configured to provide sales promotion information instead of the content when the consumer read the commercial product code on the mobile terminal 20.

It is desired that the sales promotion information should be information obtained as a result of analyzing/editing many pieces of purchase information accumulated in the purchase information DB 133. For example, the sales promotion information includes an average value of degrees of satisfaction with and feedback of or comments on the commercial product from consumers of a certain age living in a certain area. This allows a consumer who is about to purchase a commercial product to decide whether to purchase the commercial product based on the actual evaluation of the commercial product from other consumers.

Further, for example, the content providing unit 126 may provide, as the sales promotion information, information on shops selling the same commercial product at lower prices, or provide top selling commercial products in the same category. The content providing unit 126 can provide even these pieces of information from the purchase information stored in the purchase information DB 133. For example, the content providing unit 126 can compare the prices of the commercial product analyzed and registered by the analysis unit 123 to provide information on cheaper shops. Further, purchase information on recently purchased commercial products can be retrieved from the purchase information DB 133 to provide top selling commercial products. Further, for example, the content providing unit 126 may display an advertising coupon of a competing commercial product or the like without using information accumulated in the purchase information DB 133.

### <3. Processing>

### <3-1. Outline of Processing>

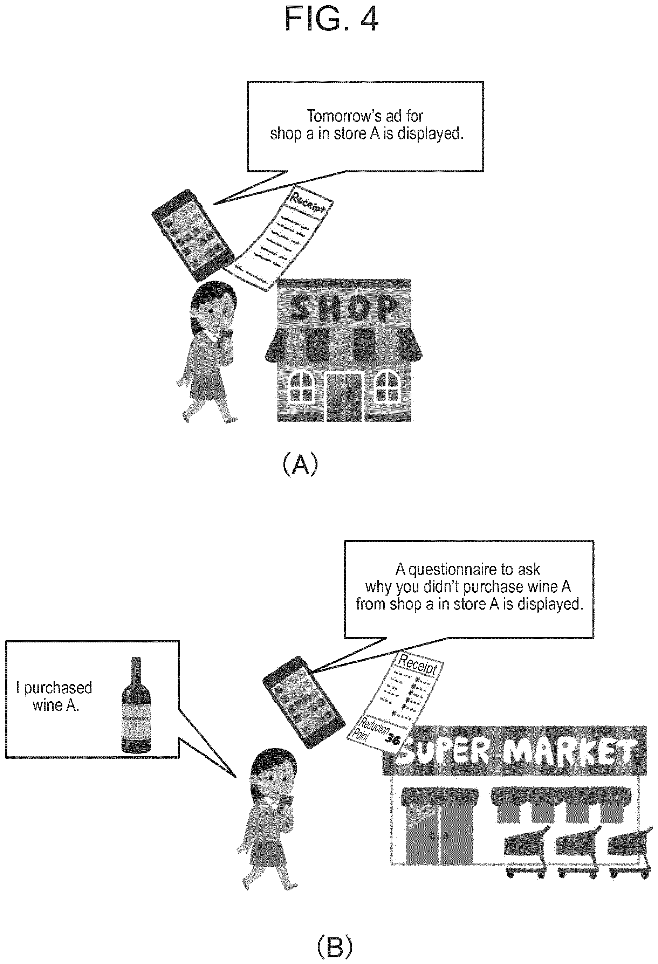

Referring next to Fig. 4, an outline of processing of the purchase information utilization system 1 will be described. In the example of Fig. 4, the description is made on the assumption that the server apparatus 10 refers to the shop DB 135 illustrated in Fig. 3 to perform processing.

Suppose that the consumer purchases a commercial product from shop a in store B and sends an image of the receipt again to the server apparatus 10. In this instance, the server apparatus 10 provides, to the mobile terminal 20, an advertisement of shop a in store A, which is a shop close in location to shop a in store B and higher in priority in the shop DB 135 (Fig. 4(A)). Further, suppose, for example, that the consumer purchased a commercial product (e.g., wine A) from shop b in store D and sent a receipt image at the time and a commercial product code of the wine to the server apparatus 10. In this instance, the server apparatus 10 provides, to the mobile terminal 20, a questionnaire asking why the consumer did not purchase the commercial product from shop a in store A, which is a shop close in location to shop b in store D and higher in priority in the shop DB 135 (Fig. 4(B)).

### <3-2. Processing Flow>

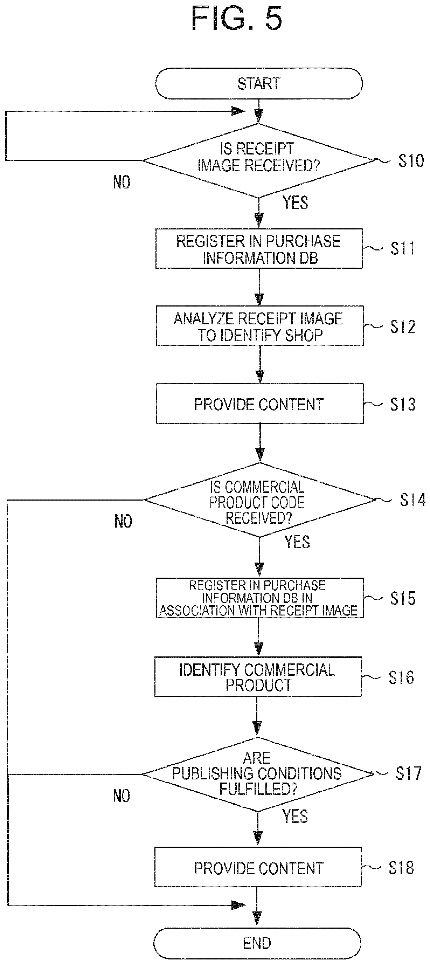

Referring to Fig. 5, a processing flow in the server apparatus 10 when the consumer performed purchase behavior illustrated in Fig. 4 will be described. In the example of Fig. 5, the description is also made on the assumption that the server apparatus 10 refers to the shop DB 135 illustrated in Fig. 3 to perform processing.

First, as illustrated in Fig. 4(A), when the consumer sends a receipt image to the server apparatus 10, the receiving unit 121 receives the sent receipt image (YES in S10). The receiving unit 121 registers the received receipt image in the purchase information DB 133 (S11). Note that when receiving a commercial product code, an image of a commercial product, a shopping scene image, and the like together with the receipt image, the receiving unit 121 also registers these pieces of information in the purchase information DB 133.

Next, the analysis unit 123 analyzes the received receipt image to extract receipt information. Further, the analysis unit 123 refers to the shop DB 135 to identify, from the telephone number included in the receipt information, a shop where the consumer performed the purchase behavior (S12). In this instance, the analysis unit 123 can also refer to a logo of the shop, the address thereof, and the like included in the receipt information to identify the shop.

Next, the content providing unit 126 refers to the shop DB 135 to extract location information and a shop code of the shop analyzed by the analysis unit 123. The content providing unit 126 selects a shop as a content providing source based on the priority from among shops having a certain relationship with the extracted location information. Further, the content providing unit 126 refers to the content DB 132 to extract content associated with the ID of the selected shop in order to provide the content to the mobile terminal 20 according to the publishing conditions (S13).

Next, as illustrated in Fig. 4(B), when the consumer has sent the server apparatus 10 a commercial product code and a receipt image at shop b of store D, the receiving unit 121 receives the sent receipt image and commercial product code (YES in S14). The receiving unit 121 registers, in the purchase information DB 133, the received commercial product code and receipt image in association with each other (S15).

In this instance, the analysis unit 123 analyzes the receipt image to identify the shop as illustrated at S12 described above. Further, the commercial product identifying unit 124 refers to the commercial product DB 134 to identify a commercial product corresponding to the commercial product code received by the receiving unit 121 (S16).

The content providing unit 126 provides content in the same way as S13 and S14 described above. In this instance, the content providing unit 126 further refers to the content DB 132 to extract content associated with the identified commercial product (wine A in this example). In the example of Fig. 4(B), it is assumed that "wine A has been purchased from a shop having the same shop code as shop a in store A" is registered as content publishing conditions corresponding to wine A. In this case, the content providing unit 126 determines that the content publishing conditions are fulfilled (YES in S17), and sends content (e.g., a questionnaire) to the mobile terminal 20 (S18).

Thus, according to the purchase information utilization system of the embodiment, content related to a shop different from the shop where the consumer purchased the commercial product can be provided based on the receipt information to the mobile terminal 20 of the consumer.

### [Second Embodiment]

In a second embodiment or embodiments that follow, only different points will be described by omitting the description of matters common to those of the first embodiment. In particular, no mention of the same operation and effect of the same component will not be made in each embodiment.

In the embodiment, the content publishing conditions registered in the content DB 132 include publishing target times. The publishing target times include a specific time slot (e.g., from 19:00 to 24:00), a specific time (e.g., 23:30), and a specific date (e.g., March 3, 2018, or March 3 every year).

The analysis unit 123 can analyze, from the received receipt image, the time when the consumer purchased a commercial product (for example, the time and date of purchase of the commercial product. Note that the issue time of the receipt may be set as the time of purchase of the commercial product).

Next, the content providing unit 126 can refer to the content DB 132 to publish predetermined content when the date and time of purchase of the commercial product analyzed by the analysis unit 123 is included in (or matched up with) the target time registered as a publishing condition. Even in the embodiment, the content providing unit 126 can publish content when any publishing condition other than the publishing target time, such as shop location information or priority, or the kind of commercial product, is added.

Thus, the content providing unit 126 according to the embodiment can provide content according to the publishing target time. For example, a time slot around the timing of replacing commercial products at a convenience store or the like can be registered as the publishing target time to give a coupon or a point instead of a discount to a consumer who has purchased a commercial product the best-before date of which is about to expire.

The other configuration and functions of the purchase information utilization system 1 are the same as those in the first embodiment.

One embodiment of the present invention has been described above. Note that the embodiment is to facilitate the understanding of the present invention, and not to limit the interpretation of the present invention. Further, changes and improvements can be made without departing from the scope of the present invention. For example, each step in the above-described processing flow can be partially omitted within a range of not causing any inconsistency with the processing content, the order of respective processing steps can be changed arbitrarily, or respective processing steps can be executed in parallel.

### Reference Signs List

- 1: purchase information utilization system
- 10: server apparatus
- 20: mobile terminal
- 110: input unit
- 120: control unit
- 121: receiving unit
- 122: determination unit
- 123: analysis unit
- 124: commercial product identifying unit
- 125: content creation unit
- 126: content providing unit
- 130: storage unit
- 131: consumer information DB
- 132: content DB
- 133: purchase information DB
- 134: commercial product DB
- 135: shop DB
- 140: communication unit
- 150: display unit
- 210: control unit
- 220: communication unit
- 230: input unit
- 240: storage unit
- 250: display unit
- 260: imaging unit

## Claims

1. A purchase information utilization system comprising:
a storage unit which stores a shop and content in association with each other;
a receiving unit which receives information related to a receipt from a terminal of a consumer;
an analysis unit which analyzes the information related to the receipt to identify a shop from which the consumer purchased a commercial product; and
a content providing unit which extracts content related to the identified shop from the storage unit, and provides the extracted content to the terminal.

2. The purchase information utilization system according to claim 1, wherein the related content includes content associated with a shop having a predetermined relationship with location information of the shop identified by the analysis unit.

3. The purchase information utilization system according to claim 1 or 2, wherein
the storage unit further stores shops in association with one another, and
the related content includes content associated with a shop stored in the storage unit in association with the shop identified by the analysis unit.

4. The purchase information utilization system according to any one of claims 1 to 3, wherein
the storage unit stores a commercial product in further association with the content, and
when the receiving unit has received a commercial product code for identifying the commercial product and the commercial product is included in the information related to the receipt, the content providing unit provides, to the terminal, content corresponding to the commercial product related to the commercial product code.

5. The purchase information utilization system according to any one of claims 1 to 4, wherein
the storage unit stores a publishing target time in further association with the content,
the analysis unit analyzes the information related to the receipt to identify a time when the consumer purchased a commercial product, and
when a time of purchase of the commercial product identified by the analysis unit and pertaining to predetermined content stored in the storage unit is included in the publishing target time, the content providing unit provides the predetermined content to the terminal.

6. A purchase information utilization method causing a computer to execute:
a step of storing a shop and content in association with each other;
a step of receiving information related to a receipt from a terminal of a consumer;
a step of analyzing the information related to the receipt to identify a shop from which the consumer purchased a commercial product; and
a step of extracting content related to the identified shop from stored content and providing the extracted content to the terminal.

7. A program causing a computer to function as:
means for storing a shop and content in association with each other;
means for receiving information related to a receipt from a terminal of a consumer;
means for analyzing the information related to the receipt to identify a shop from which the consumer purchased a commercial product; and
means for extracting content related to the identified shop from stored content and providing the extracted content to the terminal.
